# EUROPEAN PATENT APPLICATION

(11) **EP 4 645 641 A1**
(43) Date of publication of application: **05.11.2025**
(21) Application number: 25172174.2
(22) Date of filing: 24.04.2025
(51) Int. Cl.: H02J 7/00, H02J 7/14

(54) **POWER GENERATION SYSTEM AND METHOD FOR MOTORCYCLE**

(30) Priority: 26.04.2024 TW 113115804
(71) Applicant: Motive Power Industry Co., Ltd., Dacun Township, Changhua County 515 (TW)
(72) Inventor: WANG, JOHN-SUN, Taipei City 104048 (TW)
(74) Representative: Rapisardi, Mariacristina

(57) **Abstract**

A power generation system (2) includes: a generator (22), driven by an engine (20) to generate a three-phase power; a full-bridge rectifier circuit (23), generating a direct-current voltage signal according to the three-phase power and a switching signal output; a switching voltage regulator circuit (24), coupled to the full-bridge rectifier circuit (23) to receive the direct-current voltage signal and buck the direct-current voltage signal according to a control signal (C1), so as to generate an output voltage to power a storage battery (21); and a controller (25), coupled to the full-bridge rectifier circuit (23) and the switching voltage regulator circuit (24), and configured to generate the control signal (C1) and the switching signal output and output the control signal (C1) and the switching signal output respectively to the switching voltage regulator circuit (24) and the full-bridge rectifier circuit (23). The controller (25) adjusts the switching signal output according to at least a voltage value of the direct-current voltage signal and a preset voltage value.

## Description

### BACKGROUND OF THE INVENTION

### 1. Field of the Invention

The disclosure relates to a power generation system and method, and in particular to a power generation system and method for a motorcycle.

### 2. Description of the Related Art

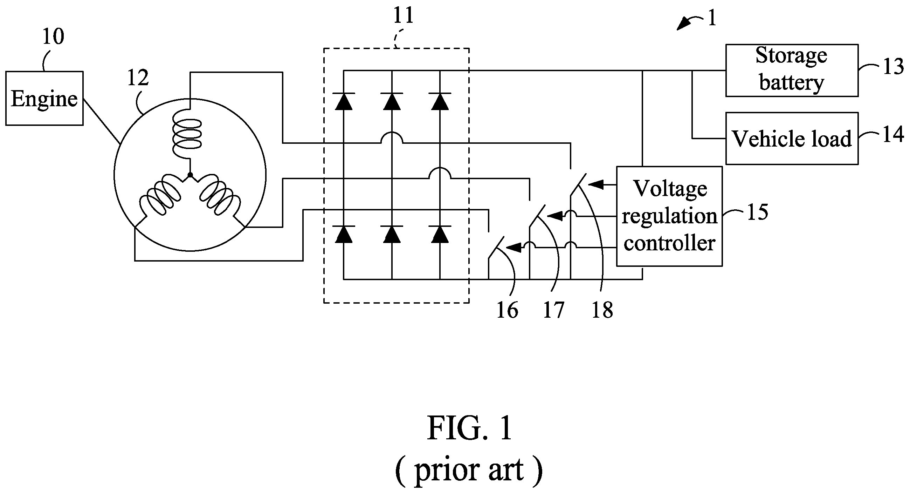

Referring to FIG. 1, the voltage regulation in the existing power generation system 1 for a motorcycle adopts a short-circuit voltage regulation structure. This power generation system 1 includes a rectifier circuit 11, a generator 12, a voltage regulation controller 15 and three switches 16, 17, 18 (which are preset to be turned off). After an engine 10 in the motorcycle drives the generator 12, a three-phase power generated by the generator 12 is regulated by the rectifier circuit 11 to a direct-current output voltage, which is directly supplied to a storage battery 13 and a vehicle load 14. After the rotational speed of the engine 10 increases, the voltage of the three-phase power generated by the generator 12 also increases, so that the direct-current output voltage generated by the rectifier circuit 11 increases accordingly. When the voltage regulation controller 15 detects that the direct-current output voltage is higher than the voltage used by the storage battery 13 or the vehicle load 14, the voltage regulation controller 15 controls at least one of the switches 16 to 18 to be turned on, so as to short-circuit the coil of the generator 12, thereby preventing the direct-current output voltage from increasing (i.e., making the power generation system 1 in a short-circuit voltage regulation state). Accordingly, the direct-current output voltage is controlled to meet the voltage used by the storage battery 13 and the vehicle load 14, thereby preventing the storage battery 13 or the vehicle load 14 from damage.

However, the generating capacity of the generator 12 is directly proportional to the rotational speed of the engine 10. The higher the rotational speed of the engine 10, the higher the generating capacity of the generator 12, but the load of the on-board electrical equipment does not increase. Therefore, when the rotational speed of the engine 10 is at a high speed for a long time and the generating capacity of the generator 12 is high, the power generation system 1 will be in the short-circuit voltage regulation state for a long time and dissipate a large amount of redundant energy in the form of heat energy, resulting in the wear and tear of the engine 10 or other components in the motorcycle.

Besides, the rectifier circuit 11, the voltage regulation controller 15 and the three switches 16, 17 may be replaced by a three-phase full-bridge circuit (not shown, which is coupled between the generator 12 and the storage battery 13). The existing generator 12 is usually operated at an operating ratio of maximum rotational speed 9000 RPM/idling rotating speed 1500 RPM. When the motorcycle of a 12 V system at the idling rotating speed of 1500 RPM wants to meet the start charging voltage, the voltage of the three-phase power generated by the generator 12 at the rotational speed of 1500 RPM should be at least 17 V. Moreover, the voltage of the three-phase power of the generator 12 is directly proportional to the rotational speed of the generator. When the generator operates at the maximum rotational speed of 9000 RPM, the voltage of the three-phase power generated by the generator 12 has exceeded 100 V, which leads to the need for transistors/electronic components in the three-phase full-bridge circuit to be high-voltage-resistant (e.g., 150 V) electronic components, resulting in a higher manufacturing cost of the power generation system 1.

Therefore, how to solve the above problems in the prior art is the main focus of the disclosure.

### BRIEF SUMMARY OF THE INVENTION

Therefore, an objective of the disclosure is to provide a power generation system for a motorcycle capable of overcoming the defects in the prior art.

Accordingly, the power generation system for a motorcycle of the disclosure is coupled between an engine and a storage battery and includes a generator, a full-bridge rectifier circuit, a switching voltage regulator circuit and a controller.

The generator is coupled to the engine and driven by the engine to generate a three-phase power. The full-bridge rectifier circuit is coupled to the generator to receive the three-phase power and generate a direct-current voltage signal according to the three-phase power and a switching signal output. The switching voltage regulator circuit is coupled to the full-bridge rectifier circuit to receive the direct-current voltage signal and buck the direct-current voltage signal according to a control signal, so as to generate an output voltage to power the storage battery. The controller is coupled to the full-bridge rectifier circuit and the switching voltage regulator circuit, and configured to generate the control signal and the switching signal output and output the control signal and the switching signal output respectively to the switching voltage regulator circuit and full-bridge rectifier circuit. The controller adjusts the switching signal output according to at least a voltage value of the direct-current voltage signal and a preset voltage value.

In some embodiments, in the power generation system for a motorcycle of the disclosure, when the generator is at an idling rotating speed, a peak voltage of the three-phase power is 10 V to 15 V.

In some embodiments, in the power generation system for a motorcycle of the disclosure, when the generator is at a maximum rotational speed, a peak voltage of the three-phase power is 80 V to 100 V.

In some embodiments, the switching voltage regulator circuit of the power generation system for a motorcycle of the disclosure includes: an output capacitor, having a first terminal coupled to the storage battery and providing the output voltage, and a grounded second terminal; an inductor, having a first terminal coupled to the first terminal of the output capacitor, and a second terminal; a diode, having a cathode coupled to the second terminal of the inductor, and a grounded anode; and a switch, coupled between the cathode of the diode and the full-bridge rectifier circuit.

In some embodiments, in the power generation system for a motorcycle of the disclosure, the switching signal output includes a first switching signal, a second switching signal, a third switching signal, a fourth switching signal, a fifth switching signal and a sixth switching signal. The controller is further coupled to the generator to obtain a back electromotive force signal of the generator. The controller determines whether the voltage value of the direct-current voltage signal is less than or equal to the preset voltage value. If the determination result is yes, the controller adjusts a start position of a high logic level of each of the first to sixth switching signals in a switching cycle to be a preset electrical angle lagging behind a zero position of the back electromotive force signal.

In some embodiments, in the power generation system for a motorcycle of the disclosure, when the controller determines that the voltage value of the direct-current voltage signal is not less than or equal to the preset voltage value, the controller adjusts or maintains the start position of the high logic level of each of the first to sixth switching signals in the switching cycle to be the same as the zero position of the back electromotive force signal.

In some embodiments, in the power generation system for a motorcycle of the disclosure, the full-bridge rectifier circuit is a three-phase full-bridge rectifier circuit including six transistors.

Another objective of the disclosure is to provide a power generation method for a motorcycle capable of overcoming the defects in the prior art.

The power generation method for a motorcycle of the disclosure is performed by a power generation system for a motorcycle and includes the following steps: (A) being driven by an engine to generate a three-phase power; (B) generating a direct-current voltage signal according to the three-phase power and a switching signal output; (C) bucking the direct-current voltage signal according to a control signal, so as to generate an output voltage to power a storage battery; (D) determining whether a voltage value of the direct-current voltage signal is less than or equal to a preset voltage value; (E) adjusting, if the determination result of step (D) is yes, a start position of a high logic level of the switching signal output to be a preset electrical angle lagging behind a zero position of a back electromotive force signal of a generator; and (F) repeating steps (D) and (E) until the voltage value of the direct-current voltage signal is greater than the preset voltage value.

In some embodiments, in the power generation method for a motorcycle of the disclosure, if the determination result of step (D) is no, the controller adjusts or maintains the start position of the high logic level of the switching signal output to be the same as the zero position of the back electromotive force signal.

In some embodiments, in the power generation method for a motorcycle of the disclosure, when the generator is at an idling rotating speed, a peak voltage of the three-phase power is 10 V to 15 V, and when the generator is at a maximum rotational speed, a peak voltage of the three-phase power is 80 V to 100 V.

The disclosure has the following effects: The power generation system for a motorcycle and the power generation method performed thereby according to the disclosure do not need to dissipate a large amount of redundant energy in the form of heat energy by short-circuit voltage regulation, which can avoid the wear and tear of the engine or other components in the motorcycle. Moreover, by controlling the magnitude of the peak voltage, the power generation system does not need to use the high-voltage-resistant electronic components, thereby lowering the required manufacturing cost. Besides, the controller is utilized to make the phase of the switching signal output lag, which can increase the voltage value of the direct-current voltage signal, thereby avoiding the situation that the switching voltage regulator circuit cannot power the storage battery or the vehicle load, and further enhancing the use efficiency of the power generation system.

### BRIEF DESCRIPTION OF THE DRAWINGS

FIG. 1 is a circuit block diagram illustrating an existing power generation system for a motorcycle.
FIG. 2 is a circuit block diagram illustrating an embodiment of a power generation system for a motorcycle of the disclosure.
FIG. 3 is a flowchart illustrating how to implement a power generation method for a motorcycle according to this embodiment.
FIG. 4 and FIG. 5 are schematic diagrams illustrating adjusting a start position of a high logic level of a switching signal output to a preset electrical angle lagging behind a zero position of a back electromotive force signal according to this embodiment.

### DETAILED DESCRIPTION OF THE INVENTION

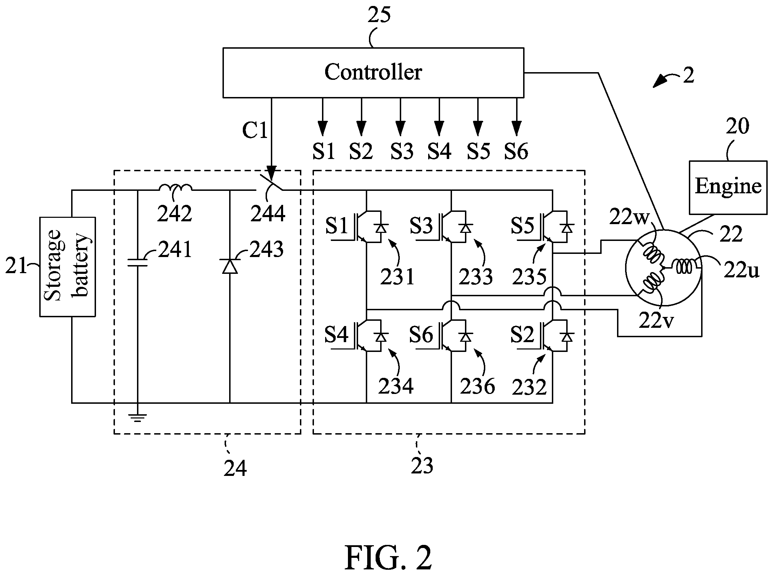

FIG. 2 illustrates an embodiment of a power generation system 2 for a motorcycle of the disclosure. The power generation system 2 is coupled between an engine 20 and a storage battery 21 and includes a generator 22, a full-bridge rectifier circuit 23, a switching voltage regulator circuit 24 and a controller 25. The power generation system 2 may be a motorcycle suitable for an integrated starter generator (ISG).

The generator 22 is coupled to the engine 20 and driven by the engine 20 to generate a three-phase power. It should be noted that the generator 22 may be an ISG, which serves as an electric motor to start the engine 20 when the motorcycle is started. After the engine 20 is started, the generator 22 is driven by the engine 20 to generate the three-phase power in the form of generator power generation, so as to enter a charging mode to power the storage battery 21 or a vehicle load (not shown). Since a peak voltage of the three-phase power of the generator 22 is positively correlated to a rotational speed of the generator 22, when the generator 22 is at an idling rotating speed (i.e., the rotational speed is 1500 RPM to 1800 RPM), a peak voltage of the three-phase power is controlled at 10 V to 15 V. When the generator 22 is at a maximum rotational speed (i.e., the rotational speed is 8000 RPM to 10000 RPM), a peak voltage of the three-phase power is controlled at 80 V to 100 V. In this way, the peak voltage of the three-phase power can be prevented from exceeding 100 V when the generator 22 is at the maximum rotational speed, so that the transistors/electronic components in the power generation system 2 do not need to be high-voltage-resistant electronic components, thereby achieving the effect of lowering the required manufacturing cost of the power generation system 2.

The full-bridge rectifier circuit 23 is coupled to the generator 22 to receive the three-phase power and generate a direct-current voltage signal according to the three-phase power and a switching signal output. In this embodiment, the switching signal output includes a first switching signal S1, a second switching signal S2, a third switching signal S3, a fourth switching signal S4, a fifth switching signal S5 and a sixth switching signal S6. The full-bridge rectifier circuit 23 is a three-phase full-bridge rectifier circuit and includes a first transistor 231, a second transistor 232, a third transistor 233, a fourth transistor 234, a fifth transistor 235 and a sixth transistor 236.

The first transistor 231 has a first terminal coupled to the switching voltage regulator circuit 24, a second terminal coupled to a U-phase coil 22u of the generator 22, and a control terminal receiving the first switching signal S1. The first transistor 231 is controlled by the first switching signal S1 to be turned on or turned off. The second transistor 232 has a first terminal coupled to a W-phase coil 22w of the generator 22, a grounded second terminal, and a control terminal receiving the second switching signal S2. The second transistor 232 is controlled by the second switching signal S2 to be turned on or turned off. The third transistor 233 has a first terminal coupled to the first terminal of first transistor 231, a second terminal coupled to a V-phase coil 22v of the generator 22, and a control terminal receiving the third switching signal S3. The third transistor 233 is controlled by the third switching signal S3 to be turned on or turned off. The fourth transistor 234 has a first terminal coupled to the second terminal of the first transistor 231, a grounded second terminal, and a control terminal receiving the fourth switching signal S4. The fourth transistor 234 is controlled by the fourth switching signal S4 to be turned on or turned off. The fifth transistor 235 has a first terminal coupled to the first terminal of the third transistor 233, a second terminal coupled to the W-phase coil 22w of the generator 22, and a control terminal receiving the fifth switching signal S5. The fifth transistor 235 is controlled by the fifth switching signal S5 to be turned on or turned off. The sixth transistor 236 has a first terminal coupled to the V-phase coil 22v of the generator 22, a grounded second terminal, and a control terminal receiving the sixth switching signal S6. The sixth transistor 236 is controlled by the sixth switching signal S6 to be turned on or turned off.

The switching voltage regulator circuit 24 is coupled to the full-bridge rectifier circuit 23 to receive the direct-current voltage signal and buck the direct-current voltage signal according to a control signal C1, so as to generate an output voltage to power the storage battery 21 or the vehicle load. In this embodiment, the switching voltage regulator circuit 24 includes an output capacitor 241, an inductor 242, a diode 243 and a switch 244.

The output capacitor 241 has a first terminal coupled to the storage battery 21 and providing the output voltage, and a grounded second terminal. The inductor 242 has a first terminal coupled to the first terminal of the output capacitor 241, and a second terminal. The diode 243 has a cathode coupled to the second terminal of the inductor 242, and a grounded anode. The switch 244 is coupled between the cathode of the diode 243 and the first terminal of the first transistor 231. It should be noted that in other embodiments, the diode 243 may be replaced by a switch (not shown), and when this switch is turned on (off), the switch 244 is turned off (on), which can reduce the conduction loss and improve the efficiency. Besides, replacing the diode 243 by this switch can make the switching voltage regulator circuit 24 form a boost loop, and the storage battery 21, which is, for example, 12 V, may be used to perform a reverse boost function to apply work to the generator 22. The switch 244 and the switch in other embodiments may be, for example, a metal-oxide-semiconductor field-effect transistor (MOSFET), a bipolar junction transistor (BJT), an insulated gate bipolar transistor (IGBT), or a gallium nitride (GaN) or silicon carbide (SiC) semiconductor switch.

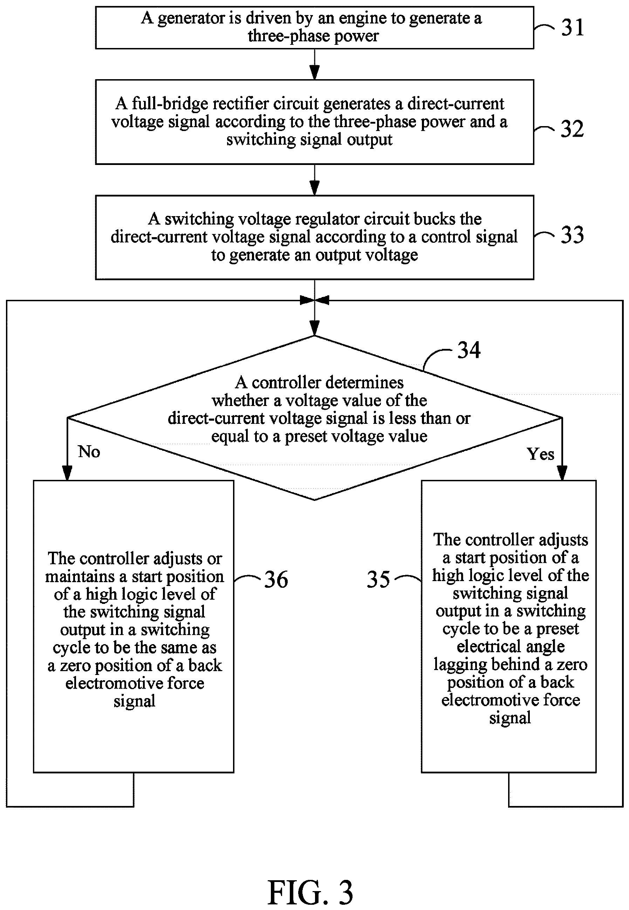

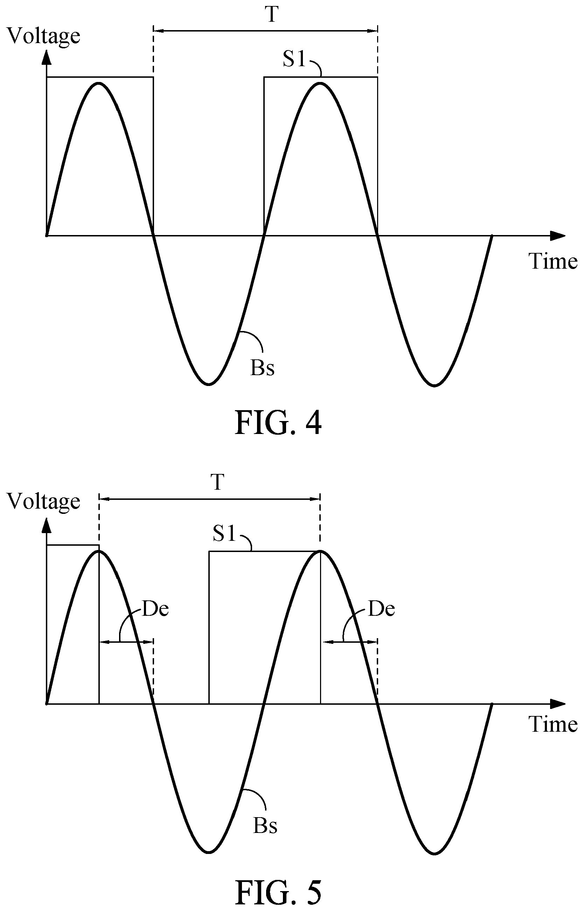

The controller 25 is coupled to the full-bridge rectifier circuit 23 and the switching voltage regulator circuit 24, and configured to generate the control signal C1 and the switching signal output (i.e., the first to sixth switching signals S1 to S6) and output the control signal C1 and the switching signal output respectively to the switching voltage regulator circuit 24 and full-bridge rectifier circuit 23. The controller 25 is further coupled to the generator 22 to obtain a back electromotive force signal Bs of the generator 22 (referring to FIG. 4). The controller 25 adjusts the switching signal output according to at least a voltage value of the direct-current voltage signal and a preset voltage value. The controller 25 is an ISG hybrid controller. The preset voltage value is, for example, a minimum voltage value that can still charge the storage battery 21 after the voltage regulation by the switching voltage regulator circuit 24. The specific operation of the controller 25 will be described in conjunction with FIG. 3.

FIG. 3 to FIG. 5 illustrate a flowchart of a power generation method for a motorcycle of the disclosure performed by the power generation system 2 for a motorcycle of the disclosure. The power generation method for a motorcycle of the disclosure includes steps 31 to 36 as follows.

In step 31, after the motorcycle is started, the generator 22 is driven by the engine 20 to generate the three-phase power.

In step 32, the full-bridge rectifier circuit 23 generates the direct-current voltage signal according to the three-phase power and the switching signal output (i.e., the first to sixth switching signals S1 to S6). It should be noted that in this case, a start position of a high logic level of each of the first to sixth switching signals S1 to S6 in a switching cycle T is the same as a zero position of the back electromotive force signal Bs (as shown in FIG. 4, since the first to sixth switching signals S1 to S6 are well known to those of ordinary skill in the art, for the sake of simplicity, only the first switching signal S1 is depicted in FIG. 4 as a simple schematic illustration).

In step 33, the switching voltage regulator circuit 24 bucks the direct-current voltage signal according to the control signal C1, so as to generate the output voltage to power the storage battery 21.

In step 34, the controller 25 determines whether the voltage value of the direct-current voltage signal is less than or equal to the preset voltage value, and if the determination result is yes (i.e., the voltage of the direct-current voltage signal is insufficient for the switching voltage regulator circuit 24 to perform the voltage regulation operation), the process proceeds to step 35. If the determination result is no, the process proceeds to step 36.

In step 35, the controller 25 adjusts the start position of the high logic level of the switching signal output in the switching cycle T to a preset electrical angle De lagging behind the zero position of the back electromotive force signal Bs (as shown in FIG. 5, since the first to sixth switching signals S1 to S6 are well known to those of ordinary skill in the art, for the sake of simplicity, only the first switching signal S1 is depicted in FIG. 5 as a simple schematic illustration). Next, steps 34 and 35 are repeated until the voltage value of the direct-current voltage signal is greater than the preset voltage value. In this way, by making the phase of the switching signal output lag behind the zero position of the back electromotive force signal Bs, the voltage value of the direct-current voltage signal continuously increases, which prevents the peak voltage of the three-phase power from being too low and the voltage value of the direct-current voltage signal from also being too low when the generator 22 is at the idling rotating speed, causing the switching voltage regulator circuit 24 to be unable to perform the voltage regulation operation, thereby avoiding the situation that the switching voltage regulator circuit 24 cannot power the storage battery 21 or the vehicle load, and further enhancing the use efficiency of the power generation system 2.

In step 36, the controller 25 adjusts or maintains the start position of the high logic level of the switching signal output in the switching cycle T to be the same as the zero position of the back electromotive force signal Bs. Next, the process proceeds to step 34 to continue the determination and perform the subsequent corresponding steps until the motorcycle undergoes a flameout, which is not limited thereto.

In detail, when the process proceeds to step 34 from step 33 for the first time and the determination result is no, the controller 25 maintains the start position of the high logic level of the switching signal output in the switching cycle T to be the same as the zero position of the back electromotive force signal Bs. When the process proceeds to step 34 from step 33 for the first time, the determination result is yes and steps 35 and 34 are sequentially repeated until the voltage value of the direct-current voltage signal is greater than the preset voltage value (i.e., the determination result of step 34 changes from yes to no), the controller 25 adjusts the start position of the high logic level of the switching signal output in the switching cycle T to be the same as the zero position of the back electromotive force signal Bs. It should be noted that in this embodiment, the controller 25 adjusts the start position of the high logic level of the switching signal output in the switching cycle T to be the same as the zero position of the back electromotive force signal Bs in the following way, which is not limited thereto. The controller 25 sequentially returns a preset return angle from the start position of the high logic level of the switching signal output in the switching cycle T (i.e., after every return of the preset return angle, the process proceeds to step 34 again to make determination again and perform the next return of the preset return angle) until the start position of the high logic level of the switching signal output in the switching cycle T is the same as the zero position of the back electromotive force signal Bs (i.e., as shown in FIG. 4). The preset return angle is the same as the preset electrical angle De, and a total number of returns that the controller 25 returns the preset return angle from the start position of the high logic level of the switching signal output in the switching cycle T corresponds to a total number of lags that the controller 25 adjusts the start position of the high logic level of the switching signal output in the switching cycle T to be lagging behind the zero position of the back electromotive force signal Bs. In other embodiments, the preset return angle may be the preset electrical angle De multiplied by the total number of lags, so that the total number of returns of the controller 25 is one. When the total number of lags is one, the total number of returns corresponds to the total number of lags. When the total number of lags is greater than one, the total number of returns is less than the total number of lags.

Based on the above, the power generation system 2 for a motorcycle of the disclosure uses the switching voltage regulator circuit 24 to regulate the voltage of the direct-current voltage signal, so as to generate the output voltage for the storage battery 21 or the vehicle load, so that the direct-current voltage signal is directly proportional to the rotational speed of the engine 20. The direct-current voltage signal is not directly correlated to the output voltage generated by the switching voltage regulator circuit 24. Therefore, the power generation system 2 does not need to short-circuit the coil of the generator 12 as in the prior art, i.e., the power generation system 2 does not need to operate in the short-circuit voltage regulation state, so that the power generation system 2 does not need to dissipate a large amount of redundant energy generated by the generator 22 in the form of heat energy by short-circuit voltage regulation, thereby obtaining higher efficiency. Moreover, since heat generation is largely reduced, the wear and tear of the engine 20 or other components in the motorcycle can be avoided, thereby prolonging the service life of the components in the motorcycle. Furthermore, when the generator 22 is at the idling rotating speed (or the maximum rotational speed), the peak voltage of the three-phase power is controlled at 10 V to 15 V (or 80 V to 100 V). In this way, the peak voltage of the three-phase power can be prevented from exceeding 100 V when the generator 22 is at the maximum rotational speed, so that the transistors/electronic components in the power generation system 2 do not need to be high-voltage-resistant electronic components, thereby lowering the required manufacturing cost of the power generation system 2. In addition, by using the controller 25 to make the phase of the switching signal output lag, the voltage value of the direct-current voltage signal can be increased, which prevents the voltage value of the direct-current voltage signal from being too low when the generator 22 is at the idling rotating speed, causing the switching voltage regulator circuit 24 to be unable to perform the voltage regulation operation, thereby avoiding the situation that the switching voltage regulator circuit 24 cannot power the storage battery 21 or the vehicle load, and further enhancing the use efficiency of the power generation system 2.

The disclosure has been disclosed above with preferred embodiments, but it should be understood by those skilled in the art that the embodiments are only used for describing the disclosure and should not be interpreted as limiting the scope of the disclosure. It should be noted that all changes and substitutions equivalent to the embodiments shall fall within the scope of the disclosure. Therefore, the scope of protection of the disclosure shall be as defined in the claims.

While the present disclosure has been described by means of specific embodiments, numerous modifications and variations could be made thereto by those skilled in the art without departing from the scope and spirit of the present disclosure set forth in the claims.

## Claims

1. A power generation system (2) for a motorcycle, coupled between an engine (20) and a storage battery (21), and comprising:
a generator (22), coupled to the engine (20) and driven by the engine (20) to generate a three-phase power;
a full-bridge rectifier circuit (23), coupled to the generator (22) to receive the three-phase power and generate a direct-current voltage signal according to the three-phase power and a switching signal output;
a switching voltage regulator circuit (24), coupled to the full-bridge rectifier circuit (23) to receive the direct-current voltage signal and buck the direct-current voltage signal according to a control signal (C1), so as to generate an output voltage to power the storage battery (21); and
a controller (25), coupled to the full-bridge rectifier circuit (23) and the switching voltage regulator circuit (24), and configured to generate the control signal (C1) and the switching signal output and output the control signal (C1) and the switching signal output respectively to the switching voltage regulator circuit (24) and the full-bridge rectifier circuit (23), the controller (25) adjusting the switching signal output according to at least a voltage value of the direct-current voltage signal and a preset voltage value.

2. The power generation system (2) for a motorcycle according to claim 1,
wherein when the generator (22) is at an idling rotating speed, a peak voltage of the three-phase power is 10 V to 15 V.

3. The power generation system (2) for a motorcycle according to claim 1,
wherein when the generator (22) is at a maximum rotational speed, a peak voltage of the three-phase power is 80 V to 100 V.

4. The power generation system (2) for a motorcycle according to claim 1, wherein the switching voltage regulator circuit (24) comprises:
an output capacitor (241), having a first terminal coupled to the storage battery (21) and providing the output voltage, and a grounded second terminal;
an inductor (242), having a first terminal coupled to the first terminal of the output capacitor (241), and a second terminal;
a diode (243), having a cathode coupled to the second terminal of the inductor (242), and a grounded anode; and
a switch (244), coupled between the cathode of the diode (243) and the full-bridge rectifier circuit (23).

5. The power generation system (2) for a motorcycle according to claim 1, wherein the switching signal output comprises a first switching signal (S1), a second switching signal (S2), a third switching signal (S3), a fourth switching signal (S4), a fifth switching signal (S5) and a sixth switching signal (S6), the controller (25) is further coupled to the generator (22) to obtain a back electromotive force signal of the generator (22), the controller (25) determines whether the voltage value of the direct-current voltage signal is less than or equal to the preset voltage value, and if the determination result is yes, the controller (25) adjusts a start position of a high logic level of each of the first to sixth switching signals (S1~S6) in a switching cycle to be a preset electrical angle lagging behind a zero position of the back electromotive force signal.

6. The power generation system (2) for a motorcycle according to claim 5, wherein when the controller (25) determines that the voltage value of the direct-current voltage signal is not less than or equal to the preset voltage value, the controller (25) adjusts or maintains the start position of the high logic level of each of the first to sixth switching signals (S1~S6) in the switching cycle to be the same as the zero position of the back electromotive force signal.

7. The power generation system (2) for a motorcycle according to claim 1,
wherein the full-bridge rectifier circuit (23) is a three-phase full-bridge rectifier circuit comprising six transistors (231~236).

8. A power generation method for a motorcycle, performed by a power generation system (2) for a motorcycle, and comprising the following steps:
(A) being driven by an engine (20) to generate a three-phase power;
(B) generating a direct-current voltage signal according to the three-phase power and a switching signal output;
(C) bucking the direct-current voltage signal according to a control signal (C1), so as to generate an output voltage to power a storage battery (21);
(D) determining whether a voltage value of the direct-current voltage signal is less than or equal to a preset voltage value;
(E) adjusting, if the determination result of step (D) is yes, a start position of a high logic level of the switching signal output in a switching cycle to be a preset electrical angle lagging behind a zero position of a back electromotive force signal of a generator (22); and
(F) repeating steps (D) and (E) until the voltage value of the direct-current voltage signal is greater than the preset voltage value.

9. The power generation method for a motorcycle according to claim 8, wherein if the determination result of step (D) is no, the start position of the high logic level of the switching signal output in the switching cycle is adjusted or maintained to be the same as the zero position of the back electromotive force signal.

10. The power generation method for a motorcycle according to claim 8, wherein when the generator (22) is at an idling rotating speed, a peak voltage of the three-phase power is 10 V to 15 V, and when the generator (22) is at a maximum rotational speed, a peak voltage of the three-phase power is 80 V to 100 V.
